# EUROPEAN PATENT APPLICATION

(11) **EP 1 413 906 A1**
(43) Date of publication of application: **28.04.2004**
(21) Application number: 03023646.7
(22) Date of filing: 17.10.2003
(51) Int. Cl.: G02B 6/38

(54) **Fiber optic connection adapter with shutter**

(30) Priority: 24.10.2002 JP 2002309934
(71) Applicant: JAPAN AVIATION ELECTRONICS INDUSTRY, LIMITED, Shibuya-ku Tokyo (JP)
(72) Inventor: Takeda, Jun, Japan Aviation Elec. Ind., Ltd., Shibuya-ku Tokyo (JP); Koreeda, Yuichi, Japan Aviation Elec. Ind., Ltd., Shibuya-ku Tokyo (JP)
(74) Representative: Hofer, Dorothea, Dipl.-Phys.

(57) **Abstract**

An optical connection adapter (100) for use in positioning and splicing optical fibers (300) is disclosed. The adapter (100) comprises a holding assembly (110) and two shutter members (160). The holding assembly (110) has a passage way (136) for positioning and holding each pair of optical fibers (300) upon the splicing. The passage way (136) extends between end portions (112) of the holding assembly (110) and is positioned at a predetermined position in a Z-direction. Each of the shutter members (160) has a flat shutter plate (161) formed with a slit (162) and is movably fitted to one of the end portions (112) of the holding assembly (110). The flat shutter plate (161) is movable between first and second positions in the Z-direction, wherein the first position is a position where the passage way (136) is blocked off by the flat shutter plate (161), while the second position is a position where the passage way (136) is opened through the slit (162) as seen from the Y-direction. The flat shutter plate (161) is urged to be positioned at the first position by a plate spring portion (165). When an optical fiber connector (200) is mated with the adapter (100), the flat shutter plate (161) is lifted up and is positioned at the second position so that the passage way (136) can receive an optical fiber (300).

## Description

### BACKGROUND OF THE INVENTION:

This invention relates to an optical instrument such as an optical fiber connector or an optical connection adapter, which is used for positioning and splicing optical fibers. Hereinafter, the optical fiber connector and the optical connection adapter are simply referred to as a connector and an adapter, respectively.

JP-A H09-211264 or JP-A 2002-243978 discloses a connector, which has a specific blocking-off structure for blocking off the light beams emitted from optical fibers until the connector is mated with an adapter or a mating connector. The connector of JP-A H09-211264 or JP-A 2002-243978 comprises a plate spring which has two ends. One end of the plate spring is connected a position, which is near to the fitting end portion of the connector and near to the bottom of the connector The other end of the plate spring is a free end and extends inwardly and upwardly so that the plate spring is substantially laid on a plane diagonal to an insertion direction of the mating connector and is able to block off the light beams emitted from the optical fibers held by the connector.

### SUMMARY OF THE INVENTION:

It is an object of the present invention to provide an optical instrument which has a different blocking-off structure for blocking off the light beams emitted from the optical fibers held by the optical instrument until the optical instrument is mated with a connector.

The object is solved according to the optical instrument of claim 1.

Preferred developments of the invention are defined in the dependent claims and the method claim thereof.

### BRIEF DESCRIPTION OF THE DRAWINGS:

Fig. 1 is a an exploded, perspective view showing a holding assembly included in an adapter according to a first embodiment of the present invention;
Fig. 2 is an oblique bottom view showing a base member of the holding assembly of Fig. 1;
Fig. 3 is a an exploded, perspective view showing the adapter of the first embodiment of the present invention;
Fig. 4 is a cross-sectional view showing the adapter of Fig. 3;
Fig. 5 is a perspective view showing a connector, which can be mated with the adapter of Fig. 3;
Fig. 6 is a cross-sectional, perspective view showing the connector of Fig. 5;
Fig. 7 is a perspective view showing a fiber end protector included in the connector of Fig. 5;
Fig. 8 is a cutaway view showing a combination of the adapter of Fig. 3 and the connector of Fig. 5, wherein a pressed portion of a shutter member is brought into contact with a projection of the fiber end protector;
Fig. 9 is a cross-sectional view showing the combination of Fig. 8, wherein the shutter member is lifted up by the projection of the fiber end protector;
Fig. 10 is a cutaway view showing the combination of Fig. 8, wherein a front portion of the fiber end protector is in contact with the shutter portion;
Fig. 11 is a cutaway view showing the combination of Fig. 8, wherein the adapter is completely mated with the connector;
Fig. 12 is a cross-sectional view showing the combination of Fig. 11;
Fig. 13 is a perspective view showing a modification of the connector of Fig. 5;
Fig. 14 is a perspective view showing a combination of an adapter and a connector in accordance with a second embodiment of the present invention;
Fig. 15 is a perspective view showing the combination of the adapter and the connector of Fig. 14, wherein the adapter and the connector are completely mated with each other.
Fig. 16 is an exploded, perspective view showing the adapter according to the second embodiment;
Fig. 17 is a perspective view showing a fiber end protector of the connector and a shutter member of the adapter of Fig. 14;
Fig. 18 is a view which is used for the description of the movement of the shutter member in the adapter of Fig. 14; and
Fig. 19 is a view which is also used for the description of the movement of the shutter member in the adapter of Fig. 14.

### DESCRIPTION OF PREFERRED EMBODIMENTS:

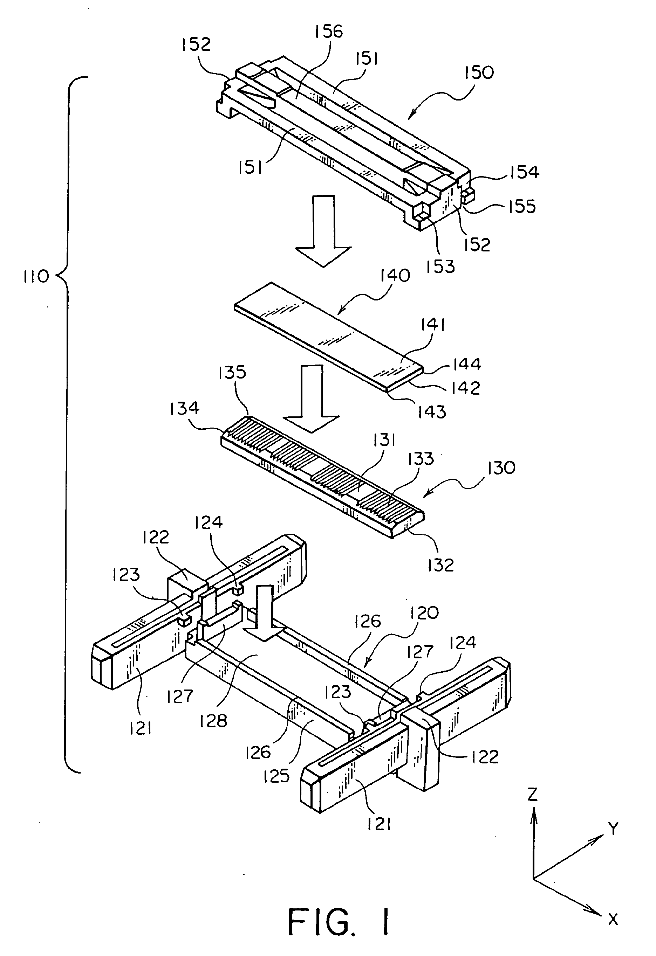

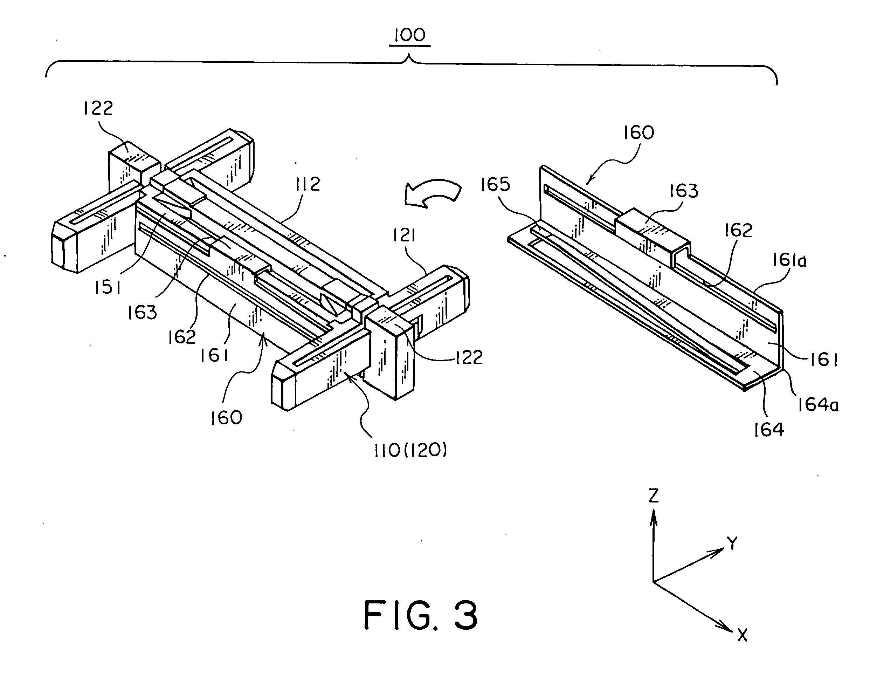

With reference to Figs. 1 to 4, an adapter according to a first embodiment of the present invention comprises a holding assembly 110 and two shutter members 160, which are fitted on the opposite end portions 112 of the holding assembly 110 in a Y-direction, respectively, as especially shown in Fig. 3.

As shown in Fig. 1, the holding assembly 110 comprises a base member 120, first and second plates 130, 140 and a pressing lid 150.

As shown in Fig. 1, the base member 120 comprises a pair of frame portions 121. Each of the frame portions 121 extends in the Y-direction and is spaced from the other frame portion 121 in an X-direction perpendicular to the Y-direction. Each of the frame portions 121 is provided with a stopper portion 122, which is positioned at the middle of the frame portion 121 in the Y-direction and has a cross section larger than the frame portion 121 in a plane perpendicular to the Y-direction so that the stopper portion 122 projects from the frame portion 121 in the X-direction and in a Z-direction perpendicular to the X- and the Y-directions. The frame portion 121 is provided with a pair of projections 123, 124. The projection 123 is positioned apart from the other projection 124 in the Y-direction so that the corresponding stopper portion 122 is positioned between the projections 123, 124. The projections 123, 124 project in the X-direction towards the corresponding projections 123, 124 of the other frame portion 121.

The base member 120 is further provided with a bottom portion 125. The bottom portion 125 is positioned between the frame portions 121 in the X-direction and connects therebetween. The bottom portion 125 is provided with a pair of rail portions 126 and a pair of standing-up portions 127. The rail portions 126 are positioned at the respective ends of the bottom portion 125 in the Y-direction. Each of the rail portions 126 extends in the X-direction and projects from the bottom portion 125 upwards in the Z-direction. The standing-up portions 127 are positioned near to other ends of the bottom portion 125 in the X-direction with certain distances left between the standing-up portions 127 and the respective ends of the bottom portion 125 in the X-direction. The standing-up portions 127 project from the bottom portion 125 upwards in the Z-direction. The rail portions 126 and the standing-up portions 127 define on the bottom portion 12 a mounting portion 128 for receiving the first plate 130.

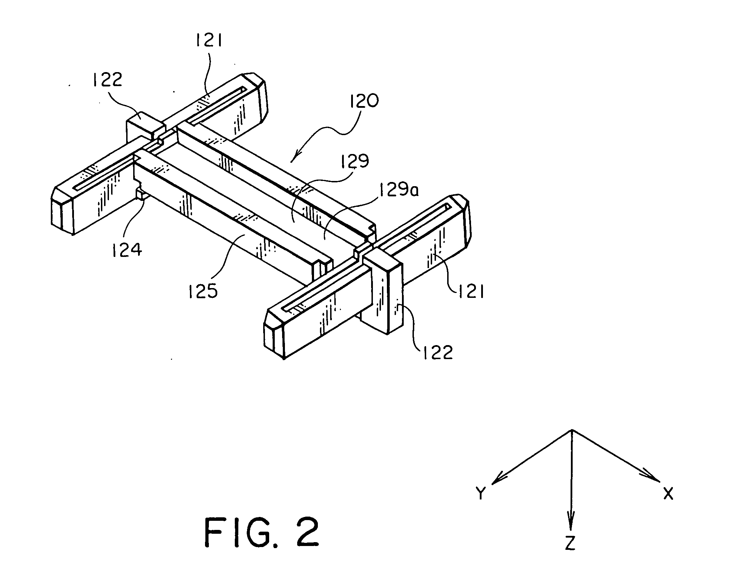

As shown in Fig. 2, the bottom portion 125 is provided with an accommodation recess 129 which is formed in the lower surface of the bottom portion 125 in the Z-direction. The accommodation recess 129 accommodates portions of the shutter members 160, which will be described afterwards.

Turning back to Fig. 1, the first plate 130 is an almost rectangular plate and is sized to be accommodated and fitted within the mounting portion 128. The first plate 130 is made of silicon in this embodiment. The first plate 130 has an upper surface 131 and a lower surface 132 which is mounted on the mounting portion 128. In the upper surface 131, a plurality of grooves 133 are formed. The grooves 133 are arranged in the X-direction. Each of the grooves 133 extends in the Y-direction and has a V-shaped cross-section in a plane perpendicular to the Y-direction, i.e. in the XZ plane. The first plate 130 has beveled edges 134, 135 which continue to the respective ends of the grooves 133.

With reference to Fig. 1, the second plate 140 is also an almost rectangular plate and is sized to correspond to the first plate 130. The second plate 140 is also made of silicon in this embodiment. The second plate 140 has upper and lower surfaces 141, 142. The lower surface 142 has two beveled edges 143, 144. The beveled edges 143, 144 extend in the X-direction.

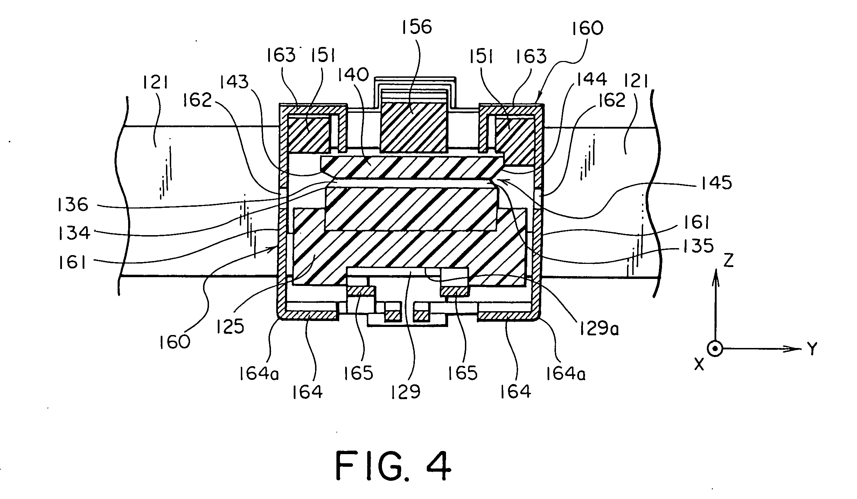

As shown in Fig. 4, the beveled edges 143, 144 define insertion guides 145 of the optical fibers 300 in cooperation with the beveled edges 134, 135 when the second plate 140 is arranged on the first plate 130. Also, a passage way 136 is defined by each of the grooves 133 and the second plate 140 when the second plate 140 is arranged on the first plate 130. Each of the passage ways 136 serves to hold and position each pair of the optical fibers 300 to splice the optical fibers 300 to each other within the passage way 136.

As shown in Fig. 1, the pressing lid 150 has two top portions 151 and a pair of sidewall portions 152. The sidewall portions 152 are formed at the opposite edges of the top portions 151 in the X-direction and project downwardly in the Z-direction so that the pressing lid 150 has a C-shaped cross section in the XZ plane.

As shown in Fig. 1, each of the sidewall portions 152 is provided with recesses 153, 154. The recesses 153, 154 are formed in the outside surface of the sidewall portion 152. The recess 153 communicates with the front side of the sidewall 152 and the upper surface of the corresponding top portion 151. The recess 154 communicates with the rear side of the sidewall 152 and the upper surface of the corresponding top portion 151. The sidewall portion 152 is also provided with a vertical recess 155, with which the recess 154 also communicates.

Each of the top portions 151 has an angular cross-section as shown in Fig. 4. As shown in Figs. 1 and 4, the pressing lid 150 is provided with a beam portion 156, which is positioned between the top portions 151 in the Y-direction and extends in the X-direction. The beam portion 156 mainly serves to fix the second plate 140 on the first plate 130 in the assembled state, as shown in Fig. 4.

The holding assembly 110 is fabricated by engaging the projections 123, 124 with the recesses 153, 154, respectively, while the first and the second plates 130, 140 are placed therebetween, as seen from Figs. 1 and 4. After that, on the end portions 112 of the holding assembly 110, the respective shutter members 160 are fitted as shown in Fig. 3.

As shown in Figs. 3 and 4, each of the shutter members 160 has a flat shutter plate 161 as a main portion thereof. The flat shutter plate 161 is fitted on the end portion 112 of the holding assembly 110 so that the flat shutter plate 161 is laid on the XZ plane. The flat shutter plate 161 is formed with a slit 162, which extends in the X-direction. At a part of the top edge 161a of the flat shutter plate 161, a guide portion 163 is formed. As shown in Fig. 4, the guide portion 163 has an angular C-like shaped cross-section, which opens downwardly in the Z-direction. The guide portion 163 is hooked on the corresponding top portion 151 of the pressing lid 150. In this meaning, the top portion 151 is also referred to as a hooked portion. The guide portion 163 allows the flat shutter plate 161 to move in the Z-direction but prevents the flat shutter plate 161 to move in the Y-direction so that the flat shutter plate 161 is guided in the Z-direction.

From the bottom edge of the flat shutter plate 161, a bottom plate 164 extends in the Y-direction to make a comer portion 164a. The comer portion 164a serves as a pressed portion which is pressed by a part of a connector when the adapter 100 is mated with the connector. The mating will be described afterwards.

The bottom plate 164 is formed with a plate spring portion 165. The plate spring portion 165 has two ends. One end of the plate spring portion 165 is connected to the bottom plate 164. The plate spring portion 165 extends in a direction diagonal to the X- and the Z-directions. The other end of the plate spring portion 165 is a free end and is brought into contact with the surface 129a of the accommodation recess 129. In other words, the plate spring portion 165 is partially accommodated with in the accommodation recess 129. The plate spring portion 165 presses the flat shutter plate 161 downwards in the Z-direction up to a position limited by the guide portion 163.

As understood from the above description, the shutter member 160 is movably fitted to the holding assembly 110. The movable range of the shutter member 160 includes first and second positions and positions therebetween, wherein the first position is a position where the slit 162 is positioned away from the passage way(s) 136 in the Z-direction, while the second position is a position where the passage way(s) 136 and the flat shutter plate 161 are positioned in correspondence with each other in the Z-direction. When the shutter member 160 is positioned at the first position, the passage way(s) 136 is closed and shut by the flat shutter plate 161. On the other hand, when the shutter member 160 is positioned at the second position, the passage way(s) is opened through the slit 162 so that the passage way(s) is able to receive optical fiber(s) 300 through the slit 162.

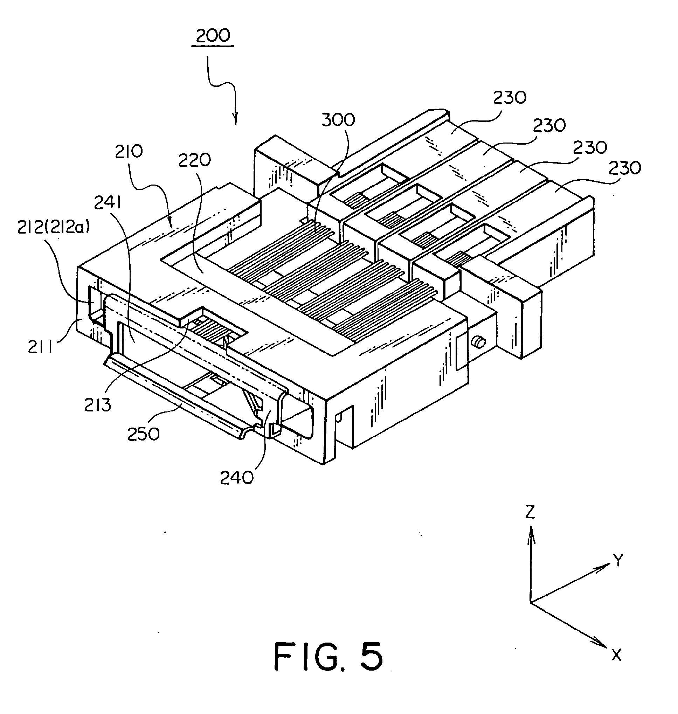

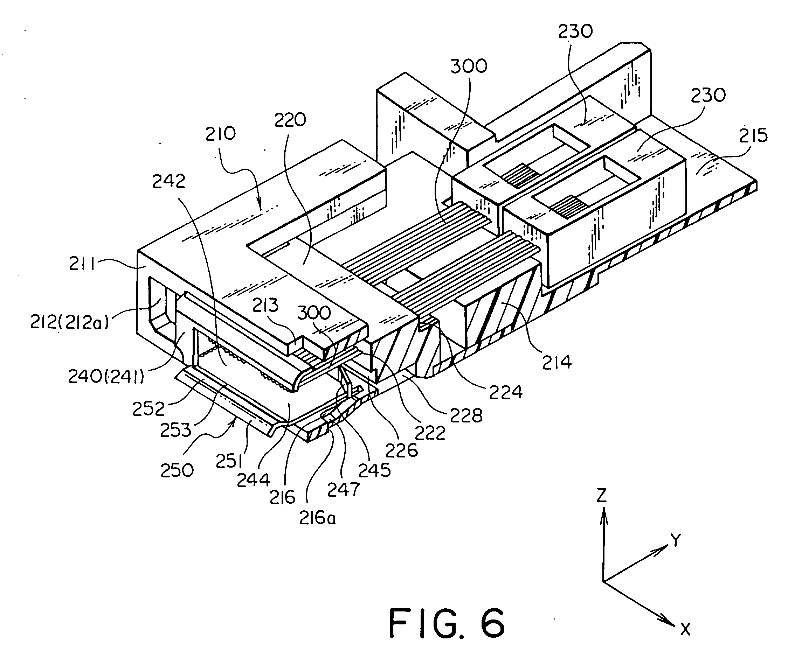

With reference to Figs. 5 and 6, a connector 200 is shown serving as a mating optical instrument for the adapter 100. The connector 200 comprises a housing 210, which has a front end portion 211 formed with a first opening 212. The housing 210 is also formed with a concave portion 213 which continues from the front end portion 211.

The housing 210 is provided with an arranging portion 220. In this embodiment, the arranging portion 220 is formed integral with the housing 210 but may be formed as a separate part from the housing 210.

As shown in Fig. 6, the arranging portion 220 has a plurality of through holes 222 each of which extends in the Y-direction and continues to a corresponding groove 224 formed in a rear part of the arranging portion 220. The through holes 222 and the grooves 224 serve to arrange and hold the optical fibers 300 so that the optical fibers 300 extend in the Y-direction. The front surface of the arranging portion 220 is spaced from the front end portion 211 of the housing 210, and the arranging portion 220 is fixed at that position in this embodiment. The front surface of the arranging portion 220 is formed with a guide recess 226, which will be described in detail afterwards. The arranging portion 220 defines a gap 228 together with the bottom portion of the housing 210. The function of the gap 228 will be also described afterwards.

As shown in Fig. 6, on the middle of the housing 210 in the Y-direction, a supporting bench 214 is provided. On a rear part of the housing 210, a depressed accommodation portion 215 is formed. On the accommodation portion 215, a plurality of clamp members 230 are mounted and accommodated. The supporting bench 214 supports a plurality of the optical fibers 300 extending from the clamp members 230 to the through holes 222 and the grooves 224 of the arranging portion 220.

As shown in Figs. 5 and 6, a fiber end protector 240 is fitted into the first opening 212 so that opposite openings 212a are defined adjacent to the opposite edges of the fiber end protector 240 in the X-direction.

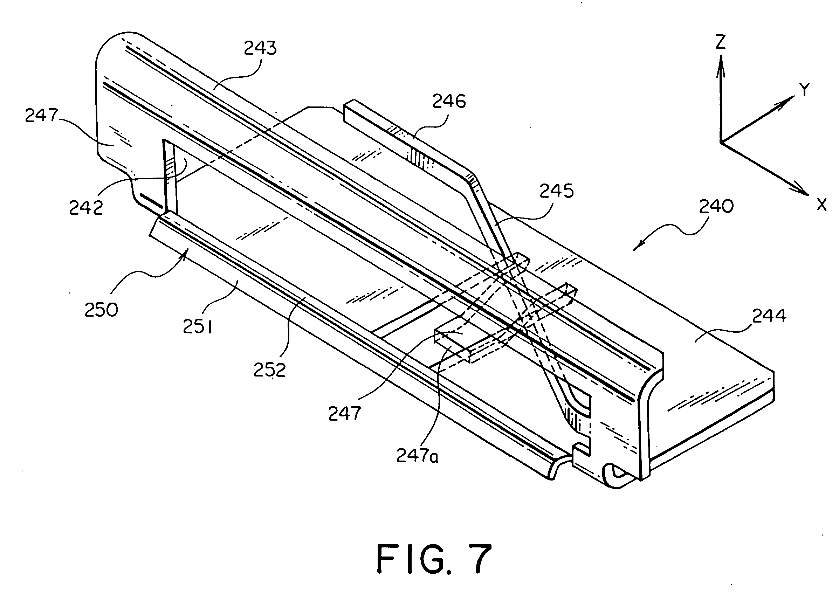

As shown in Fig. 7, the fiber end protector 240 has a front portion 241, in which a second opening 242 is formed. From the upper edge of the front portion 241, an upper portion 243 extends in the Y-direction. Also, from the lower edge of the front portion 241, a lower portion 244 extends in the Y-direction, especially in the same direction as the upper portion 243 so that the fiber end protector 240 generally has a C-like shaped cross-section in the YZ plane.

As shown in Fig. 7, the fiber end protector 240 is formed with a plate spring 245. As shown in Fig. 6, the free end 246 is brought into contact with the guide recess 226 of the arranging portion 220. As shown in Figs. 6 and 7, the fiber end protector 240 is further provided with a stopper tongue 247, which is disposed within an elongated hole 216 formed in the bottom of the housing 210. The fiber end protector 240 is pressed forwards by the plate spring 245 while an end portion 247a of the stopper tongue 247 bumps onto a front wall 216a of the elongated hole 216 so that the fiber end protector 240 slightly projects from the front end portion 211 of the housing 210. The optical fibers 300 are held and arranged by the arranging portion 220 so that the optical fibers 300 also slightly projects from the front end portion 211 but are positioned inside the fiber end protector 240. Therefore, the fiber end protector 240 protects the ends of the optical fibers 300. When the front portion 241 is pressed against the spring force of the plate spring 245, the free end 246 of the plate spring 245 slides on the guide recess 226 of the arranging portion 220 and the lower portion 244 of the fiber end protector 240 is accommodated within the gap 228 so that the fiber end protector 240 is retracted from the front end portion 211 and the ends of the optical fibers 300 are exposed.

With reference to Figs. 5 to 7, the fiber end protector 240 is formed with a projection 250 projecting forwards in the Y-direction. The projection 250 is elongated in the X-direction. The projection 250 has a slanting surface 251, a flat surface 252, and a connecting portion 253. The slanting surface 251 is diagonal to the Y- and the Z-directions. The flat surface 252 extends from the slanting surface 251 towards the inside of the connector 200 in the Y-direction and is laid on the XY plane, which is different from the lower portion 244 of the fiber end protector 240. The connecting portion 253 connects the flat surface 252 and the lower portion 244 of the fiber end protector 240.

When the adapter 100 is not mated with the connector 200, the shutter member 160 is positioned at the first position. Therefore, the slit 162 is positioned different from the passage way(s) 136 in the Z-direction so that the passage way(s) 136 is blocked off by the flat shutter plate 161 as seen from the Y-direction.

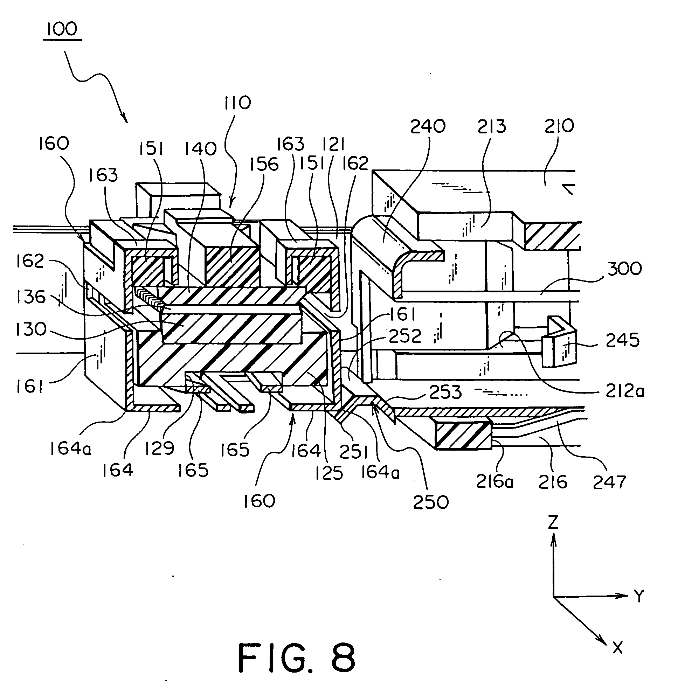

When the frame portions 121 are inserted into the opposite openings 212a, the pressed portion 164a of the shutter member 160 is at first brought into contact with the slanting surface 251 of the projection 250, as shown in Fig. 8. As the insertion further continues, the pressed portion 164a of the shutter member 160 is pressed, by the slanting surface 251, towards a direction oblique to the Y- and the Z-directions. In this embodiment, because the spring force of the plate spring 245 and the spring force of the plate spring portion 165 are adjusted suitably, the flat shutter plate 161 is moved up or lifted up in the Z-direction by the further insertion of the frame portions 121 into the connector 200, so that the shutter member 160 is positioned at the second position. Therefore, the passage way(s) 136 is opened and can be seen from the Y-direction through the slit 162.

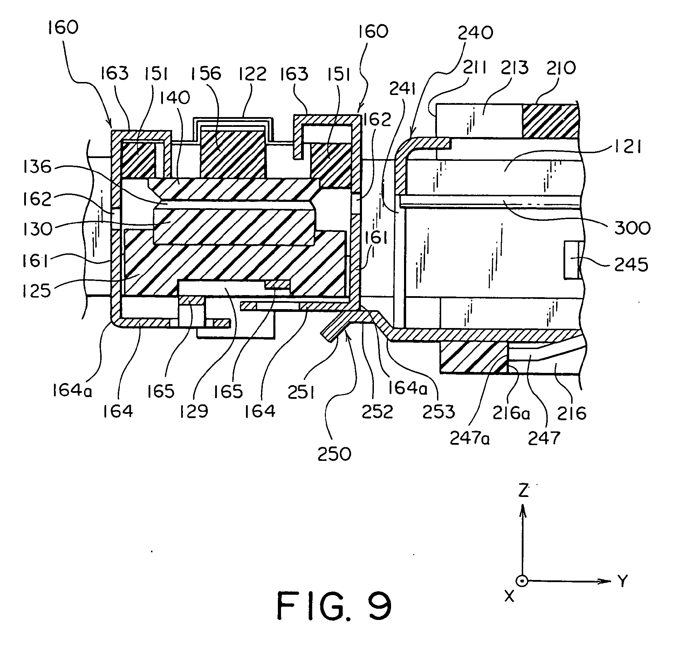

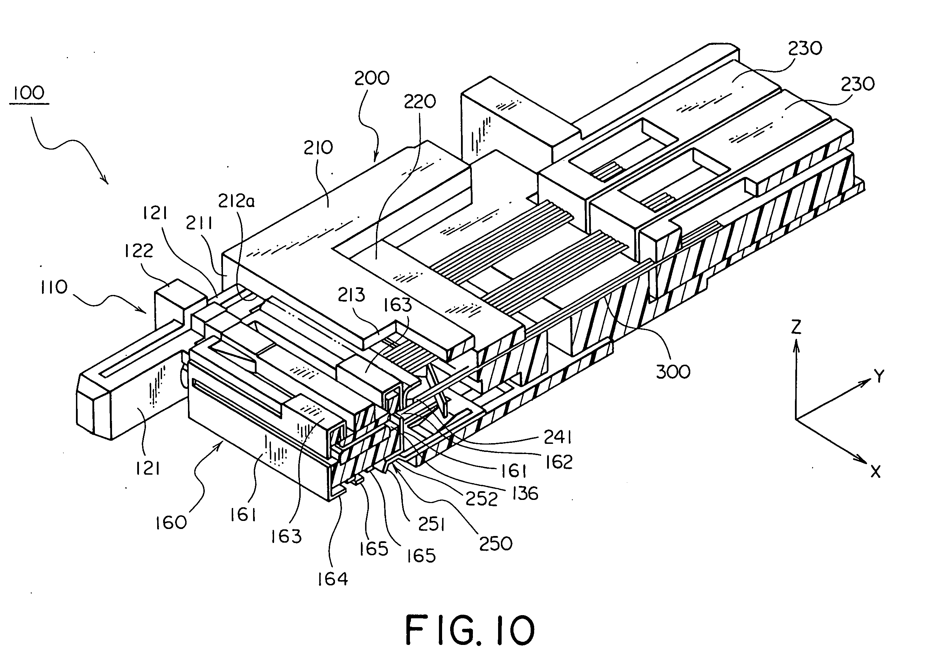

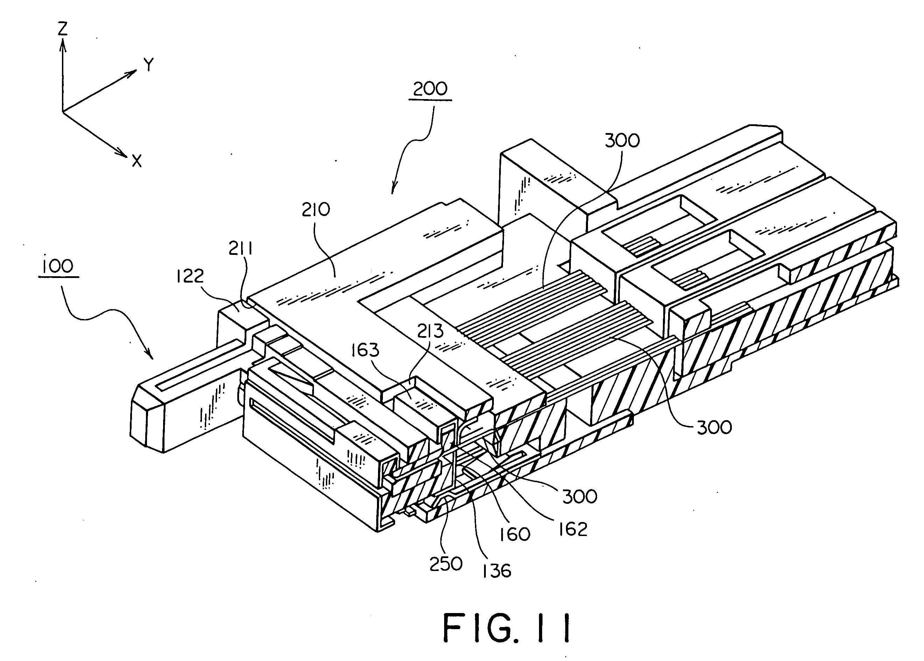

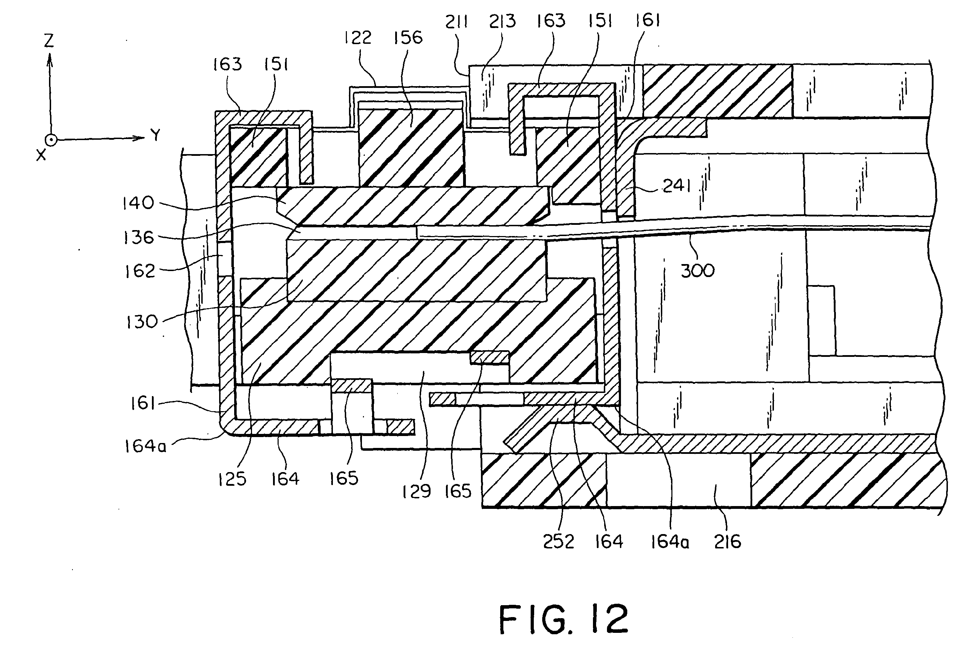

After lifted up by the slanting surface 251, the shutter member 160 is maintained at the second position by the flat surface 252 of the projection 250, as shown in Fig. 9. After that, when the insertion of the frame portions 121 into the connector 200 further continues, the front end portion 211 of the housing 210 is in contact with the flat shutter plate 161 as shown in Fig. 10. As the insertion further continues after the contact between the front end portion 211 and the flat shutter plate 161, the optical fibers 300 held by the connector 100 are inserted into the respective passage ways 136 through the slit 162, while the fiber end protector 240 is pressed against the spring force of the plate spring 245 in the Y-direction by the flat shutter plate 161 until the front end portion 211 bumps onto the stopper portions 122, as shown in Figs. 11 and 12. Thus, the adapter 100 is completely mated with the connector 200. At the time of the complete mating, the guide portion 163 is accommodated into the concave portion 213.

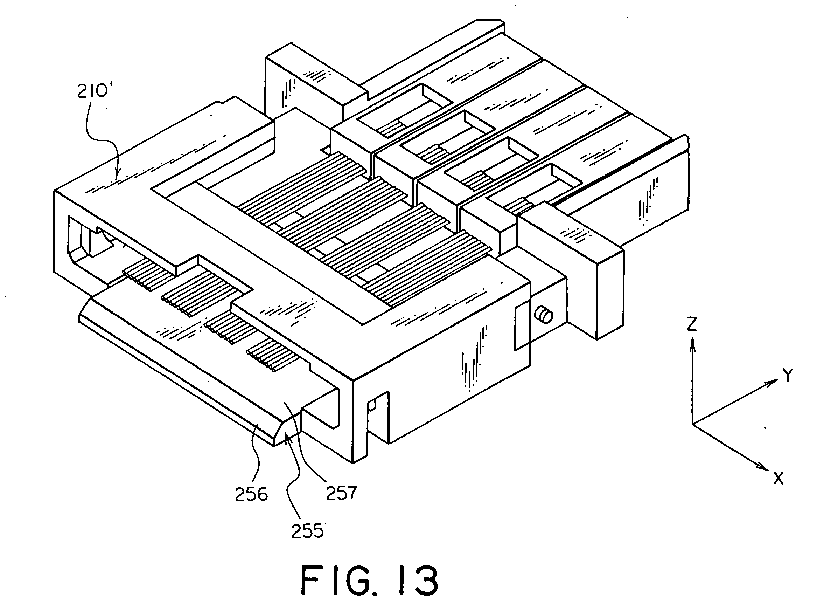

The connector may not have the fiber end protector 240. For example, as shown in Fig. 13, a housing 210' may be formed integral with a projection 255. The projection 255 has a slanting surface 256 and a flat surface 257. The slanting surface 256 and the flat surface 257 function similar to the slanting surface 251 and the flat surface 252 of the projection 250, although the flat surface 257 is longer than the flat surface 252 in the Y-direction because the projection 255 is different from the projection 250 and is not retracted backwards in the Y-direction.

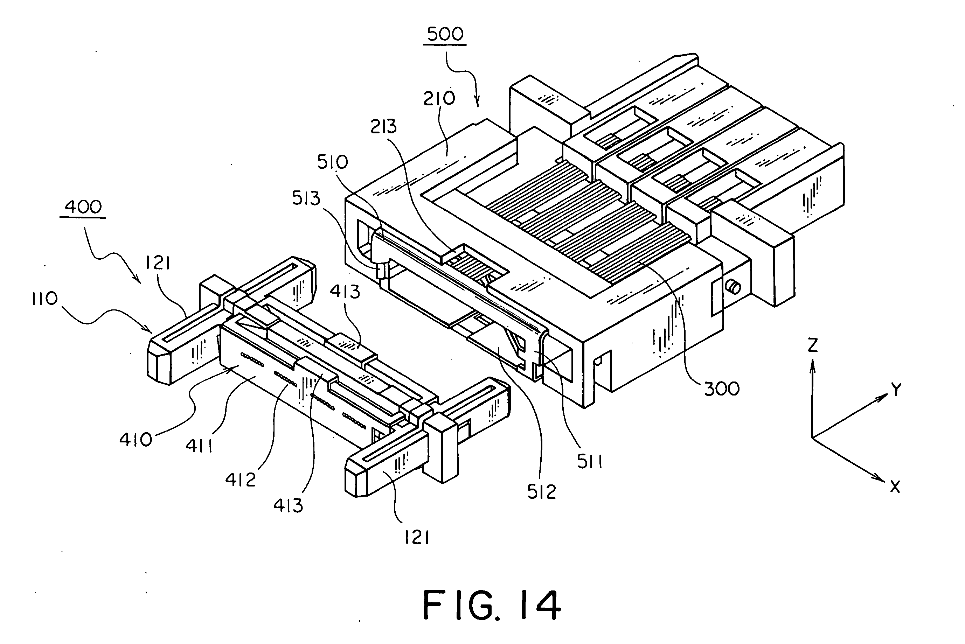

With reference to Figs. 14 to 19, an adapter 400 and a connector 500 according to a second embodiment of the present invention are described hereinbelow. The adapter 400 has a similar structure to the adapter 100 of the first embodiment except for shutter members 410. The connector 500 has a similar structure to the connector 200 of the first embodiment except for a fiber end protector 510. The following explanation is made of only the above-mentioned differences.

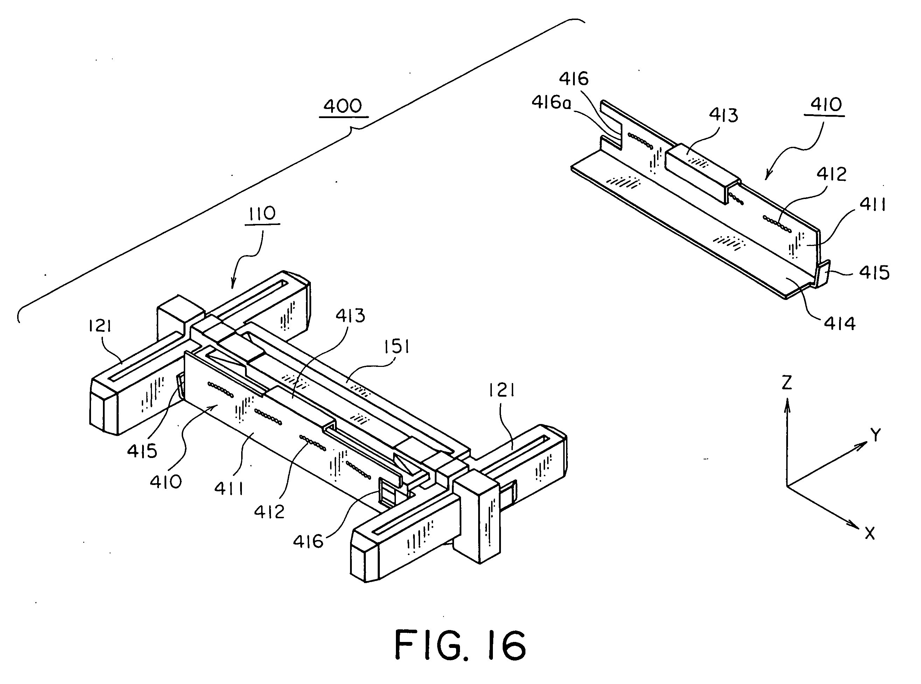

As best shown in Fig. 16, each of the shutter members 410 comprises a flat shutter plate 411, which is formed with a plurality of circular holes 412. The flat shutter plate 411 is formed with a guide portion 413, which is hooked on the corresponding top portion 151 of the holding assembly 110 to guide the movement of the shutter member 410 in the X-direction. From the lower edge of the flat shutter plate 411, a lower portion 414 extends in the Y-direction. At one side edge of the lower portion 411, a plate spring portion 415 is provided. The plate spring portion 415 extends in a direction diagonal to the X- and the Z-directions so that it provides the shutter member 410 with a spring force in the X-direction in cooperation with the inner surface of the corresponding frame portion 121. In a side edge of the flat shutter plate 411 opposite to the side near to the plate spring portion 415, a cutaway portion 416 is formed. An inner edge of the cutaway portion 416 extends in the Z-direction and serves as a pressed portion 416a, which will be described afterwards.

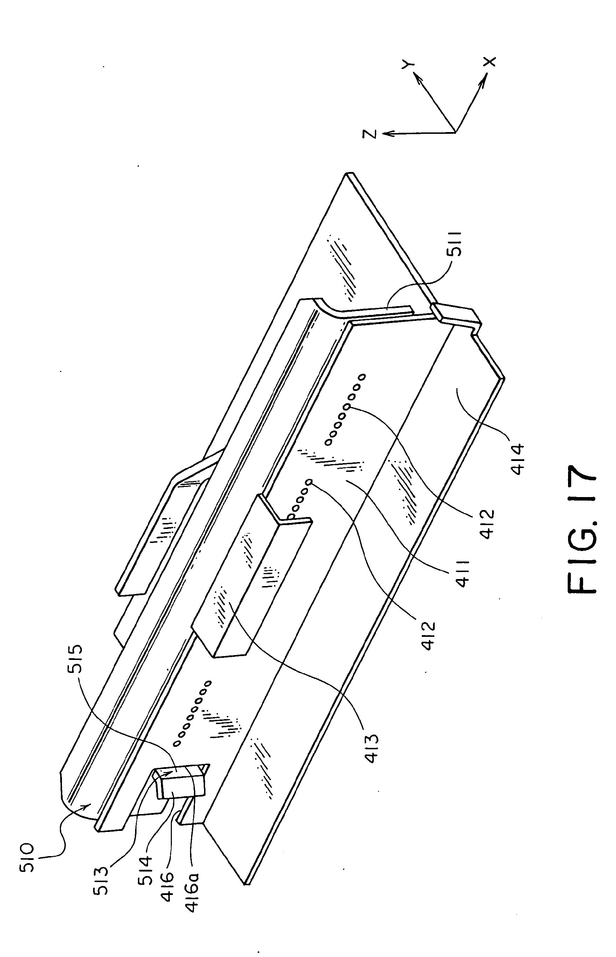

As shown in Figs. 14 and 17, the fiber end protector 510 of the connector 500 has a structure similar to the fiber end protector 240 according to the first embodiment. However, the fiber end protector 510 does not have the projection 250 but has a projection 513 which is positioned at a side of an opening 512 of a front portion 511 of the fiber end protector 511. The projection 513 has a slanting surface 514, which is diagonal to the X- and the Y-directions. The slanting surface 514 continues to a flat surface 515 which is laid on the YZ plane.

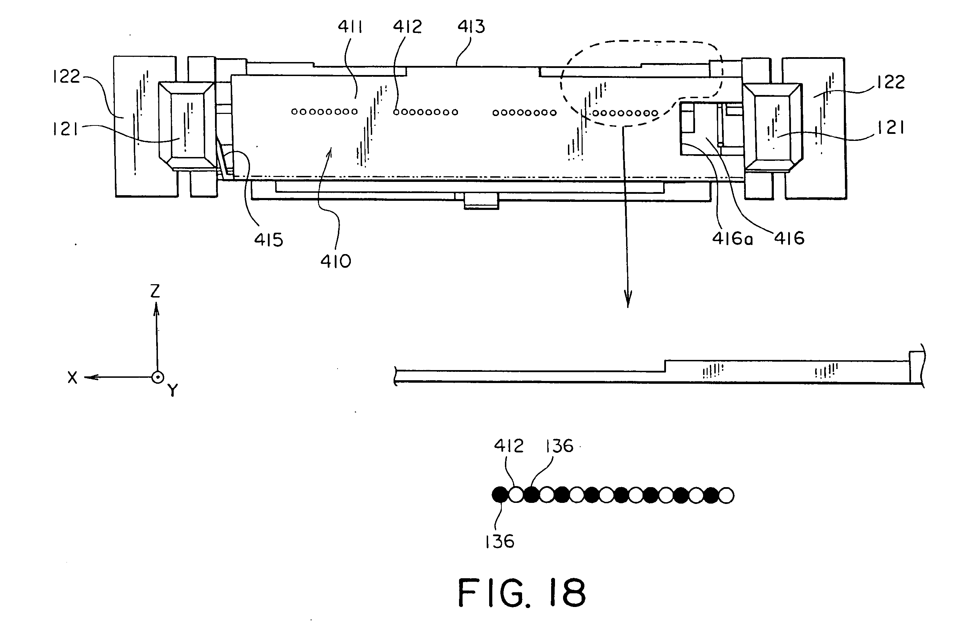

Under an unmated state, the shutter member 410 is positioned at the first position by the plate spring portion 415. At that time, the circular holes 412 are positioned different form the respective passage ways 316 in the X-direction, as shown in Fig. 18. Therefore, the passage ways 316 are closed and shut by the flat shutter plate 411.

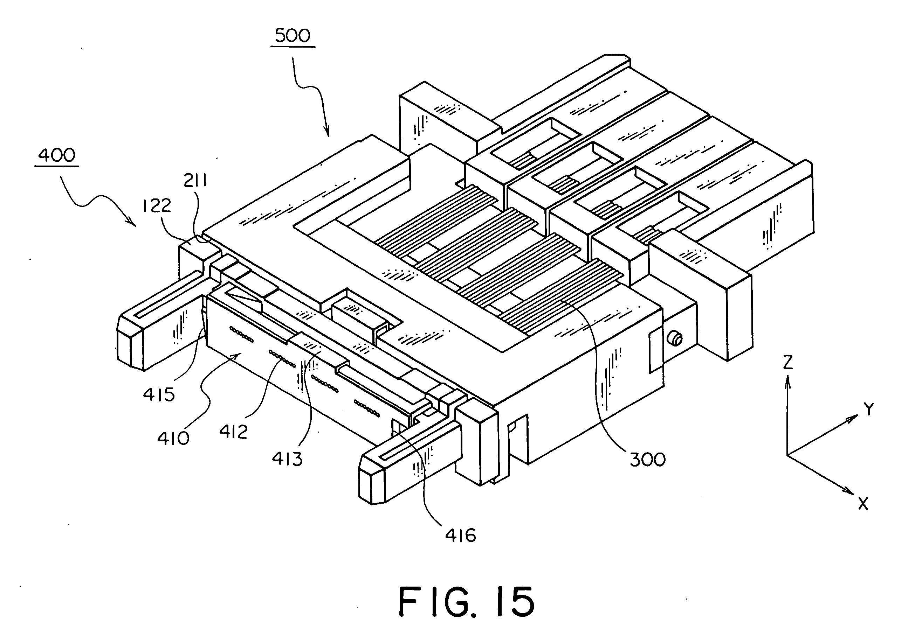

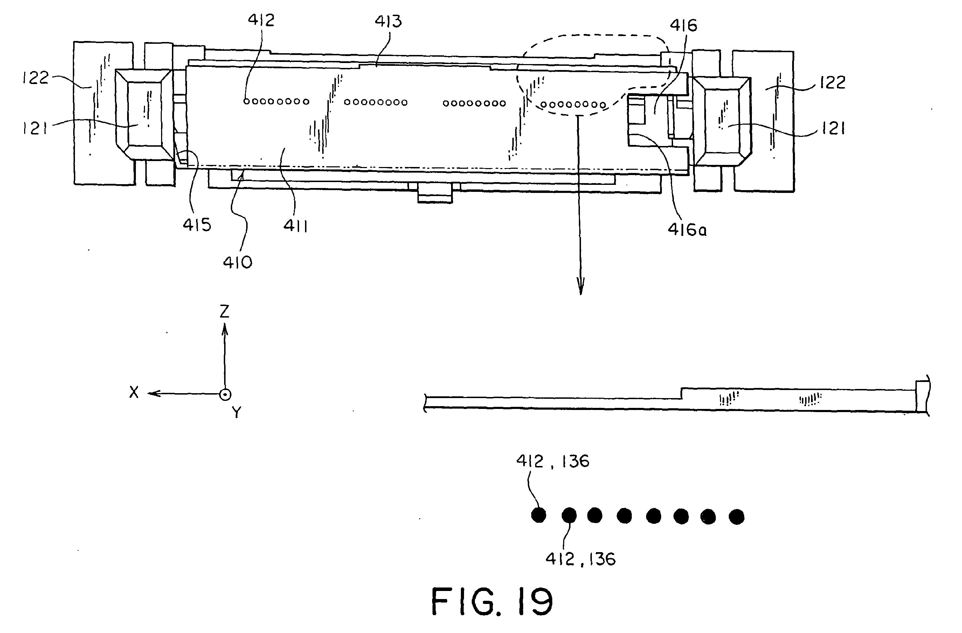

At the beginning of the mating of the adapter 400 and the connector 500, the slanting surface 514 of the projection 513 is brought into contact with the pressed portion 416a of the cutaway portion 416. Therefore, as the insertion of the frame portions 121 into the connector 500 continues, the flat shutter plate 411 is moved in the X-direction until the shutter member 410 is positioned at the second position, as shown in Figs. 17 and 19. After the flat shutter member 410 arrives at the second position in the X-direction, even when the frame portions 121 are further inserted into the connector 500, the shutter member 410 is kept at the second position by the flat surface 515 and the plate spring portion 415. At that time, the holes 412 and the passage ways 316 are positioned in correspondence with each other, as shown in Fig. 19, so that the passage ways 136 can receive the optical fibers 300. Thus, when the adapter 400 is completely mated with the connector 500 as shown in Fig. 15, the optical fibers 300 held by the connector 500 are inserted into the respective passage ways 136 of the adapter 400 through the holes 412 of the corresponding shutter member 410.

The flat shutter plate 161 of the first embodiment is formed with the slit 162 as an aperture, while the flat shutter plate 411 of the second embodiment is formed with the circular holes 412 as apertures. However, the aperture(s) may be angular hole(s) or ellipse hole(s) but is not limited to the first and the second embodiments.

## Claims

1. An optical instrument (100) for use in splicing at least one pair of optical fibers (300), comprising:
a holding assembly (110), which has two end portions (112) in a first direction and at least one passage way (136) for positioning and holding the optical fibers (300) upon the splicing, wherein the passage way (136) extends between the end portions (112) in the first direction and is positioned at a predetermined position in a second direction perpendicular to the first direction;
a shutter member (160), which has a main portion (161) formed with at least one aperture (162) and is movably fitted to one of the end portions (112) of the holding assembly (110), wherein the main portion (161) is movable between first and second positions in the second direction, the first position is a position where the aperture (162) is positioned away from the predetermined position in the second direction so that the passage way (136) is blocked off by the main portion (161), and the second position is a position where the passage way (136) and the aperture (162) are positioned in correspondence with each other in the second direction so that the passage way (136) is opened through the aperture (162) in the first direction; and
urging means (165) for urging the main portion (161) of the shutter member (160) to be positioned at the first position.

2. The optical instrument (100) according to claim 1, wherein the main portion (161) of the shutter member (160) comprises a flat shutter plate (161) formed with the aperture (162), and the flat shutter plate (161) is laid on a plane perpendicular to the first direction.

3. The optical instrument (100) according to claim 1 or 2, further comprising guiding means (163) for guiding a movement of the main portion (161) of the shutter member (160) in the second direction while preventing the main portion (161) from moving in the first direction.

4. The optical instrument (100) according to claim 3, wherein: the shutter member (160) further comprises a pressed portion (164a); and, when the pressed portion (164a) is pressed towards a predetermined direction oblique to the first and the second directions, the guiding means (163) guides the main portion (161) in the second direction.

5. The optical instrument (100) according to claim 3 or 4, the guide means (163) is formed integral with the shutter member (160).

6. The optical instrument (100) according to claim 5, wherein: the holding assembly (110) has a hooked portion (151); the guide means (163) has a C-like shaped cross-section in a plane defined by the first and the second directions, wherein the C-like shaped cross-section opens in the second direction; and the guide means (163) is hooked on the hooked portion (151) to movably hold the hooked portion (151).

7. The optical instrument (100) according one of claims 1 to 6, wherein the aperture (162) is a circular hole, an angular hole, an ellipse hole or a slit extending in a third direction perpendicular to the first and the second directions.

8. An optical connection adapter (100) comprising the optical instrument in accordance with one of claims 1 to 7.

9. A mating optical instrument (200) which is able to be mated with the optical instrument (100) according to claim 4, comprising a projection (250), which is brought into contact with the pressed portion (164a) and presses the pressed portion (164a) in the predetermined direction when the mating optical instrument (200) is mated with the optical instrument (100), preferably, the projection (250) has a slanting surface (251) perpendicular to the predetermined direction.

10. An optical fiber connector (200) comprising the mating optical instrument in accordance with claim 9.

11. The optical fiber connector (200) according to claim 10, comprising a housing (210) and a fiber end protector (240), wherein: the housing (210) is formed with an opening (212); the fiber end protector (240) is movably arranged in the opening (212) so that the fiber end protector (240) projects from the housing (210) through the opening (212) when the optical fiber connector (200) is not mated with the optical instrument (100) and, on the other hand, the fiber end protector (240) is retracted within the housing (210) when the optical fiber connector (200) is mated with the optical instrument (100); and the projection (250) is formed integral with the fiber end protector (240).

12. The optical fiber connector (200) according to claim 10, comprising a housing (210') which is provided with the projection (255).

13. A combination of the optical instrument or the optical connection adapter (100) according to one of claims 1 to 8 and the mating optical instrument or the optical fiber connector (200) according to one of claims 9 to 12.
